# EUROPÄISCHE PATENTANMELDUNG

(11) **EP 1 479 984 A1**
(43) Veröffentlichungstag der Anmeldung: **24.11.2004**
(21) Anmeldenummer: 04001054.8
(22) Anmeldetag: 20.01.2004
(51) Int. Cl.: F24H 9/20, F23N 5/10, F23N 5/12, F23N 5/24, F23N 5/00

(54) **Verfahren und Vorrichtung zur vorbeugenden Fehlererkennung bei elektronisch geregelten und gesteuerten Geräten**

(30) Priorität: 30.01.2003 DE 10303843; 22.07.2003 AT 11442003
(71) Anmelder: Vaillant GmbH, 42859 Remscheid (DE)
(72) Erfinder: Maass, Andre, 42107 Wuppertal (DE); Manz, Dietmar, 51709 Marienheide (DE)
(74) Vertreter: Hocker, Thomas

(57) **Zusammenfassung**

Verfahren zur vorbeugenden Fehlererkennung bei elektronisch geregelten oder gesteuerten Geräten mit Mitteln zur Erkennung mindestens eines Zustandes oder einer Meßgröße, wobei bei definierten Abweichungen mindestens eines Zustandes oder einer Meßgröße innerhalb des zulässigen Betriebsbereiches die Steuerung oder Regelung den Zustand eines möglichen Fehlers oder Mangels erkennt und eine entsprechende Betriebsgröße in den Zustand des Vorliegens eines möglichen Fehlers oder Mangels versetzt.

## Beschreibung

Die Erfindung bezieht sich auf ein Verfahren und eine Vorrichtung zur vorbeugenden Fehlererkennung bei elektronisch geregelten oder gesteuerten Geräten mit Mitteln zur Erkennung mindestens eines Zustandes oder einer Meßgröße.

Bei derartigen Geräten ist es gemäß dem Stand der Technik üblich, dass das Gerät betrieben wird, bis sich ein Zustand oder eine Meßgröße außerhalb des Sollbereiches befindet. Hierbei ist es möglich, dass aufgrund der Erkennung eines Zustandes oder des Vorliegens einer Meßgröße die Betriebsparameter verändert werden, um das Gerät besser zu betreiben.

Bei Heizgeräten ist es üblich, dass, sofern ein erster Brennerstart nicht erfolgreich war, ein zweiter Brennerstart erfolgt. Ist dieser auch nicht erfolgreich, so erfolgt ein dritter Brennerstart. Ist dieser erfolglos, so wird das Gerät abgeschaltet. Das Gerät kann nur noch manuell wieder entriegelt und gestartet werden. Startet das Gerät wiederholt beim 3. Versuch, so ist es zwar wahrscheinlich, dass etwas nicht optimal eingestellt ist, doch wird dies nicht kundgetan. Beispielsweise könnten sich Ablagerungen an der Zündelektrode gebildet haben, die bei den ersten zwei Zündversuchen erst aufgebrochen werden müssen, damit beim dritten Zündversuch der Zündfunke ausreichend stark ist. Eine Wartung beziehungsweise ein Wechsel der Zündelektrode wäre in diesem Fall ratsam, wird jedoch gemäß dem Stand der Technik nicht veranlaßt.

Verfügt ein Heizgerät über aktive Mittel zur Regelung des Brenngas-Luft-Verhältnisses, so wird das Verhältnis Brenngas zu Luft entsprechend einem Meßwert (z.B. Lambda-Sonde, Ionisationsstrom, Kohlenmonoxid-Emission) eingestellt. Liegt der Meßwert innerhalb eines Sollbereiches, so wird davon ausgegangen, dass die Messung in Ordnung ist. Ist der Meßwert außerhalb eines Plausibilitätsbereichs, so geht man von einem Defekt aus und schaltet die Regelung ab.

Der Erfindung liegt die Aufgabe zugrunde, mögliche Unregelmäßigkeiten frühzeitig zu erkennen, um dadurch präventive Gegenmaßnahmen frühzeitig einleiten zu können.

Erfindungsgemäß wird dies bei einem Verfahren der eingangs erwähnten Art durch die kennzeichnenden Merkmale des unabhängigen Anspruches erreicht. Liegt eine Abweichung vor, die nicht zu einer Störabschaltung führt, jedoch auf das mögliche Vorliegen eines Fehlers oder Mangels hinweist, so wird eine entsprechende Betriebsgröße in einen entsprechend inkrementierten Zustand versetzt.

Gemäß den Merkmalen des abhängigen Anspruchs 2 erfolgt dann eine Mitteilung zur Durchführung einer Gerätewartung.

Entsprechend den Merkmalen des abhängigen Anspruchs 3 erfolgt die Mitteilung zur Durchführung einer Gerätewartung mittels Leuchtanzeige oder Display am Gerät, Funkübertragung an ein externes Display, Datenübertragung über ein Telekommunikationssystem oder Sprachausgabe, gegebenenfalls gleichzeitig auf mehrere Arten.

Gemäß den Merkmalen des abhängigen Anspruchs 4 wird die Art und gegebenenfalls der Umfang der Abweichung übermittelt, wodurch Gegenmaßnahmen einfacher eingeleitet werden können.

Durch die Merkmale des abhängigen Anspruchs 5 ist geschützt, dass die Erkennung des mögliche Vorliegens eines Fehlers oder Mangels dazu führt, dass das Gerät mit geänderten oder eingeschränkten Parametern weiter betrieben wird. Hierdurch wird ein sicherer Betrieb ermöglicht, da die geänderten oder eingeschränkten Parameter einen besonders stabilen Betrieb gewährleisten.

Gemäß den Merkmalen des abhängigen Anspruchs 6 wird die Anwendung des Verfahrens in einem Heizgerät geschützt.

Durch die Merkmale des abhängigen Anspruchs 7 wird die Anwendung des Verfahrens für besonders relevante Funktionen geschützt.

Die Merkmale der Ansprüche 8 bis 15 beschreiben eine Anlage zur Durchführung des Verfahrens.

Die Erfindung wird nun anhand der Zeichnungen näher erläutert.

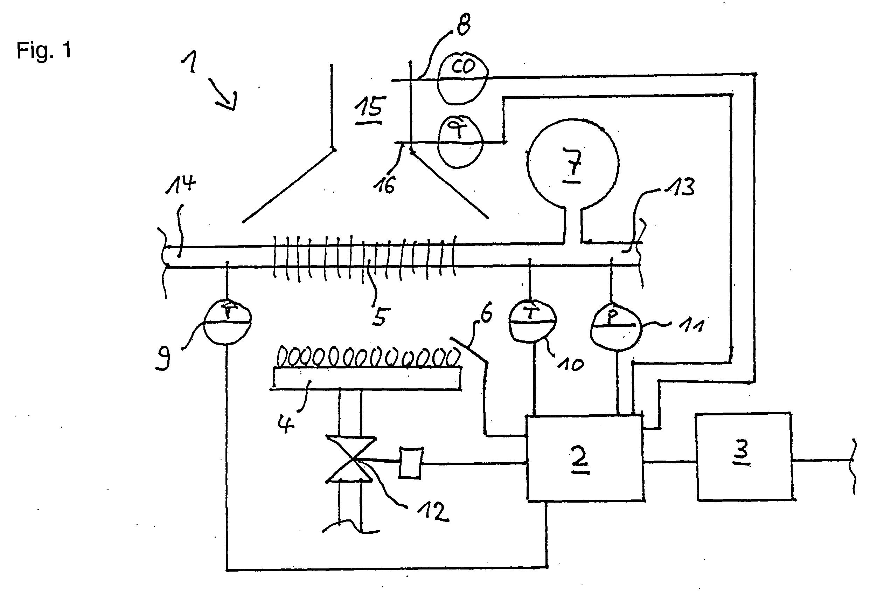

Fig. 1 zeigt ein Heizgerät 1 mit einem Brenner 4, der über ein regelbares Gasventil 12 mit Brenngas versorgt wird, und einem Wärmeaustauscher 5. Der Wärmeaustauscher 5 wird über eine Rücklaufleitung 13, in der sich ein Temperatursensor 10, ein Ausdehnungsgefäß 7 und ein Drucksensor 11 befinden mit einem Kühlmedium - in der Regel Wasser - beaufschlagt. In der Vorlaufleitung 14 befindet sich ein Temperatursensor 9. Im Abgasweg 15 befinden sich ein CO-Sensor 8 und ein Temperatursensor 16. Oberhalb des Brenners 4 ist eine Ionisationselektrode 6 angeordnet. Das regelbare Gasventil 12, der Temperatursensor 10, der Drucksensor 11, der Temperatursensor 9, der CO-Sensor 8, Temperatursensor 16 und die Ionisationselektrode 6 sind mit einer Regelung 2 verbunden. Diese ist wiederum mit einem Modem 3 verbunden.

Beim Brennerstart öffnet die Regelung 2 das Gasventil 12. Brenngas strömt aus dem Brenner 4 aus und wird von einer nicht dargestellten Zündelektrode gezündet. Zwischen der Ionisationselektrode 6 und Masse liegt eine Spannung an, wodurch die Regelung 2 die Flamme erkennt und demnach das Gasventil 12 offen hält. Wasser durchstömt den Wärmeaustauscher 5. Die Temperatursensoren 9 und 10 erfassen die Vor- bzw. Rücklauftemperatur und geben das entsprechende Signal an die Regelung 2 weiter. Der Drucksensor 11 erfasst den Druck im Leitungssystem und gibt das entsprechende Signal an die Regelung 2 weiter. Der CO-Sensor 8 erfaßt die Kohlenmonoxidemission im Abgasweg 15 und gibt das entsprechende Signal an die Regelung 2 weiter. Über das Modem 3 können die Daten der Regelung 2 weitergeleitet werden. So kann beispielsweise ein Handwerker das Gerät überwachen, ohne vor Ort sein zu müssen.

Die Anzahl der Zündversuche bis zum Vorhandensein einer Flamme wird mit Hilfe der Ionisationselektrode 6 erfaßt und verarbeitet. In Abhängigkeit von dem aktuellen Zündversuchszähler wird ein Fehlerzähler unterschiedlich bewertet inkrementiert. Erfolgt die Zündung erfolgreich im ersten Versuch, wird der Fehlerzähler schwach bewertet dekrementiert. Hierdurch läßt sich frühzeitig ein fehlerhaften Zündsystem erkennen.

Während des Brennerbetriebs wird die Abgastemperaturen mittels des Temperatursensors 16 überwacht. Überschreiten die Temperatur voreingestellte Schwellwerte wird der Fehlerzähler bewertet inkrementiert. Bei einem abgeschlossenen Brennerbetrieb ohne Überschreiten der Grenzwerte wird der Fehlerzähler schwach bewertet dekrementiert. Hierdurch läßt sich frühzeitig ein verunreinigtes Abgassystem erkennen.

Der Wasserdruck wird mittels des Drucksensors 11 ermittelt und auf seine absoluten Werte überprüft. Werden Grenzwerte unterschritten, so wird der Fehlerzähler inkrementiert. Nach Überschreiten eines Grenzwertes wird der Zähler dekrementiert. Hierdurch läßt sich frühzeitig ein unzureichender Wasserdruck im Gesamtsystems erkennen.

Beim Start des Brenners wird der aktuelle Wasserdruck zwischengespeichert. Erhöht sich während des Brennerbetriebs der Anlagendruck, wird von einen defektem Ausdehnungsgefäß ausgegangen. In Abhängigkeit von der Druckerhöhung wird der Fehlerzähler unterschiedlich stark inkrementiert. Ein Brennerbetrieb ohne Überschreiten der Druckwerte dekrementiert den Fehlerzähler. Hierdurch läßt sich frühzeitig ein defektes Ausdehnungsgefäß im Gesamtsystems erkennen.

Werden während des Brennerbetriebs unzulässig hohe Gradienten am Temperatursensor 10 im Vorlauf erkannt, so wird je nach überschrittenem Grenzwert der Fehlerzähler unterschiedlich stark bewertet inkrementiert. Findet kein unzulässige Gradientüberhöhung statt, wird der Fehlerzähler schwach dekrementiert. Hierdurch läßt sich frühzeitig ein mangelhaft durchströmtes Wassersystem erkennen.

Driftet der z.B der Basiswiderstand (R₀) des CO-Sensors 8 von seinem Ausgangswiderstand weg, so wird in Abhängigkeit seiner Abweichung der Fehlerzähler unterschiedlich stark bewertet inkrementiert. Verschieben sich die Abweichungen wieder zum Ausgangswert, wird der Fehlerzähler dekrementiert. Hierdurch läßt sich frühzeitig ein defekter CO-Sensor erkennen.

Die Fehlerzähler werden in Abhängigkeit des überschrittenen Grenzwertes unterschiedlich bewerte inkrementiert. Nach einem erfolgreichen Betrieb werden die Zähler schwach bewertet dekrementiert.

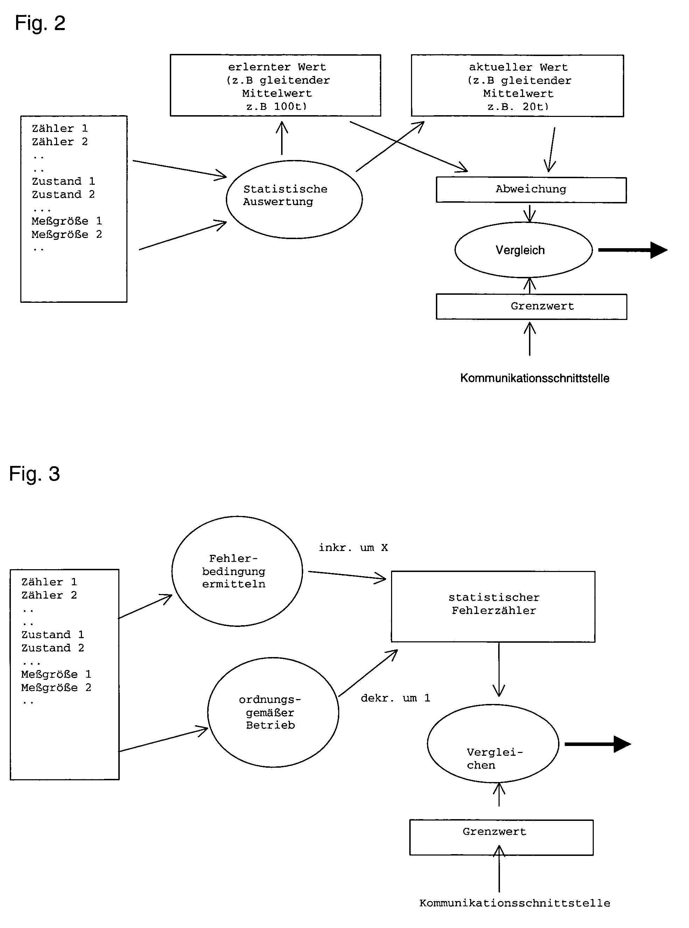

Es wird - wie in Fig. 2 vereinfacht dargestellt - jeweils ein gleitender Mittelwert von Meß(Sensoren), Aktoren-, Zähler- oder Zustandsgrößen über einen langen und einen kurzen Zeitraum gebildet. Wenn der kurze von dem langen Mittelwert um mehr als einen vorgegebenen Grenzwert abweicht, wird die Fehlerkennung aktiviert. Der Grenzwert wird entweder fest in der Steuerung programmiert oder über eine Kommunikationsschnittstelle in der Produktion der Geräte, beim Service des Gerätes über einen Laptop oder über eine Fernverbindung (Modem, ISDN,..) vorgegeben.

Anhand von Meß- (Sensoren), Aktor-, Zähler- oder Zustandsgrößen wird festgestellt ob der Betrieb ordnungsgemäß ist. Wenn der Betriebs ordnungsgemäß ist, wird ein statistischer Fehlerzähler bis minimal null erniedrigt. Im Fehlerfall um X erhöht, wobei X größer oder gleich eins sein kann. Wenn der statistische Zähler einen Grenzwert überschreitet, wird die Fehlerkennung aktiviert. Dies geht aus Fig. 3 hervor.

Als Fehlerbedingungen kommen in Frage:
- Meßwerte zeigen zu hohe und/oder zu niedrige Gradienten (z. B. Wassermangelüberwachung)
- Die Differenz zwischen Meßwerten ist zu hoch und / oder zu niedrig. (z.B. Abgasüberwachung)
- Die Meßwerte liegen außerhalb eines definierten Bereichs. (Erkennung von NTC-Kurzschluß)
- Ein Regler erreicht seine maximale und / oder minimale Stellgröße
- Ein bestimmter Betriebszustand (2. Zündversuch) wird eingenommen
- Die Kalibrierung eines Sensor ist nicht mehr möglich (z.B. CO-Sensor).

Die Laufzeit von Aktoren, Sensoren und/ der des Geräts wird mit einem Zähler gemessen. Überschreitet die Laufzeit einen vorgegeben Grenzwert, dann wird die Fehlererkennung aktiviert.

Die Anzahl der Schaltspiele von Aktoren, Sensoren und/oder des Geräts wird mit einem Zähler gemessen. Überschreitet den Schaltspiele einen vorgegebenen Grenzwert, dann wird die Fehlererkennung aktiviert.

Ein Sensor über- und / oder unterschreitet eine Grenzwert Überschreitet der Fehlerzähler einen einstellbaren Schwellwert, wird eine Status- und Servicemeldung über das Modem 3 an einen Handwerker, der über das Telefonnetz mit dem Gerät verbunden ist weitergeleitet. Der Handwerker hat mittels Modem die Möglichkeit, die präventive Wartung mit ihren Randparametern zu starten und zu überwachen. Er kann via Modem die Zählerstände (aktuell,min,max) einsehen.

Erfolgt eine Wartung vor Ort, so wird die Zählerstände zurückgesetzt und ein neuer Überwachungszyklus beginnt.

## Patentansprüche

1. Verfahren zur vorbeugenden Fehlererkennung bei elektronisch geregelten oder gesteuerten Geräten mit Mitteln zur Erkennung mindestens eines Zustandes oder einer Meßgröße, **dadurch gekennzeichnet, dass** bei definierten Abweichungen mindestens eines Zustandes oder einer Meßgröße innerhalb des zulässigen Betriebsbereiches die Steuerung oder Regelung den Zustand eines möglichen Fehlers oder Mangels erkennt und eine entsprechende Betriebsgröße in den Zustand des Vorliegens eines möglichen Fehlers oder Mangels versetzt.

2. Verfahren zur vorbeugenden Fehlererkennung gemäß Anspruch 1, **dadurch gekennzeichnet, dass** eine Mitteilung zur Durchführung einer Gerätewartung erfolgt.

3. Verfahren zur vorbeugenden Fehlererkennung gemäß Anspruch 2, **dadurch gekennzeichnet, dass** die Mitteilung zur Durchführung einer Gerätewartung mittels Leuchtanzeige oder Display am Gerät, Funkübertragung an ein externes Display, Datenübertragung über ein Telekommunikationssystem und / oder Sprachausgabe erfolgt.

4. Verfahren zur vorbeugenden Fehlererkennung gemäß Anspruch 2 oder 3, **dadurch gekennzeichnet, dass** die Art und optional der Umfang der Abweichung übermittelt wird.

5. Verfahren zur vorbeugenden Fehlererkennung gemäß einem der Ansprüche 1 bis 4, **dadurch gekennzeichnet, dass** das Gerät mit geänderten oder eingeschränkten Parametern weiter betrieben wird.

6. Verfahren zur vorbeugenden Fehlererkennung gemäß einem der Ansprüche 1 bis 5, **dadurch gekennzeichnet, dass** es bei einem Heizgerät eingesetzt wird.

7. Verfahren zur vorbeugenden Fehlererkennung gemäß Anspruch 6, **dadurch gekennzeichnet, dass** Zündung, Abgastemperatur, Wasserdruck, Funktion des Ausdehnungsgefäßes, Wassermangel, Abgassensoren und / oder Ionisationsstromsensoren überwacht werden.

8. Vorrichtung zur vorbeugenden Fehlererkennung bei elektronisch geregelten oder gesteuerten Geräten mit Mitteln zur Erkennung mindestens eines Zustandes oder einer Meßgröße, **dadurch gekennzeichnet, dass** Mittel zum Vergleichen der ermittelten Zustände und Meßgrößen mit Sollzuständen und / oder Sollmeßwerten, Mittel zur Feststellung des Zustand des Vorliegens eines möglichen Fehlers oder Mangels und Mittel zur Datenübertragung vorhanden sind.

9. Vorrichtung gemäß Anspruch 8, **dadurch gekennzeichnet, dass** beim Vorliegen eines möglichen Fehlers oder Mangels die Mittel zur Datenübertragung ein entsprechendes Signal weiterleiten.

10. Vorrichtung gemäß Anspruch 8 oder 9, **dadurch gekennzeichnet, dass** die Mittel zur Datenübertragung leitungsgebunden oder nichtleitungsgebunden zum Beispiel in Form eines Displays, Modems, Netzwerkverbindung, Funkverbindung, Infrarotverbindung oder Bluetoothverbindung arbeiten.

11. Vorrichtung gemäß einem der Ansprüche 8 bis 10, **dadurch gekennzeichnet, dass** Mittel zur Sprachausgabe vorhanden sind.

12. Vorrichtung gemäß Anspruch 11, **dadurch gekennzeichnet, dass** beim Vorliegen eines möglichen Fehlers oder Mangels eine Sprachausgabe erfolgt.

13. Vorrichtung gemäß einem der Ansprüche 8 bis 12, **dadurch gekennzeichnet, dass** beim Vorliegen eines möglichen Fehlers oder Mangels das Gerät mit geänderten oder eingeschränkten Parametern weiter betrieben wird.

14. Vorrichtung gemäß einem der Ansprüche 8 bis 13, **dadurch gekennzeichnet, dass** die Vorrichtung ein Heizgerät ist.

15. Vorrichtung gemäß einem der Ansprüche 8 bis 14, **dadurch gekennzeichnet, dass** Zündung, Abgastemperatur, Wasserdruck, Funktion des Ausdehnungsgefäßes, Wassermangel, Abgassensoren und / oder Ionisationsstromsensoren überwacht werden.
